# EUROPÄISCHE PATENTSCHRIFT

(11) **EP 0 917 975 B1**
(45) Veröffentlichungstag und Bekanntmachung des Hinweises auf die Patenterteilung: **13.08.2003**
(21) Anmeldenummer: 98120372.2
(22) Anmeldetag: 28.10.1998
(51) Int. Cl.: B60J 7/14, B60J 7/20

(54) **Vorrichtung zur Ablage der Dachkonstruktion eines Hardtop-Fahrzeugs**
Storing device for the roof structure of hardtop vehicles
Dispositif pour le rangement d'un mécanisme de toit pour véhicule avec toit rigide

(30) Priorität: 21.11.1997 DE 19751660
(43) Veröffentlichungstag der Anmeldung: 26.05.1999
(73) Patentinhaber: DaimlerChrysler AG, 70567 Stuttgart (DE)
(72) Erfinder: Schenk, Bernhard, 71034 Böblingen (DE)

(56) Entgegenhaltungen:
- EP-A- 0 704 330
- DE-A- 3 808 910
- US-A- 5 558 388

## Beschreibung

Die Erfindung bezieht sich auf eine Dachablage-Vorrichtung nach der im Oberbegriff von Anspruch 1 näher definierten Art.

Gattungsgemäße Vorrichtungen für Hardtop-Fahrzeuge sind z.B. in der DE 44 45 944 C1 beschrieben und auch aus der DE 44 45 580 C1, der DE 195 16 877 C1 und der EP 0 704 330 A1 bekannt.

Die Ablage der Dachkonstruktion mit einem Frontdachteil und mit einem Heckdachteil, das mit einer festen Heckscheibe versehen ist, erfolgt auf zwei verschiedene Arten. In einfacher Weise erfolgt die Verschwenkung um einen Hauptdrehpunkt derart, daß das Frontdachteil und das Heckdachteil mit der Heckscheibe gegensinnig gewölbt im Heckbereich des Fahrzeuges abgelegt werden. Diese Ablageart hat den Nachteil, daß damit ein erheblicher Teil des Kofferraumvolumens verlorengeht.

Bei einer anderen Ablageart erfolgt die Dachablage von Frontdachteil und Heckdachteil mit der Heckscheibe in gleicher Krümmungsrichtung. Zwar wird damit deutlich weniger Kofferraumvolumen beansprucht, aber nachteilig dabei ist jedoch, daß die für diese Ablage erforderliche Kinematik relativ aufwendig ist und teilweise auch eine Erhöhung des Fahrzeughecks erforderlich macht.

Aus der DE 38 08 910 C2 ist ein versenkbares Faltverdeck bekannt. Hierbei wird beim Öffnen des Faltverdecks die Heckscheibe zwangsgesteuert mit dem Faltverdeck in das Aufnahmefach und beim Schließen des Faltverdecks vor die Hecköffnung verlagert.

Der vorliegenden Erfindung liegt die Aufgabe zugrunde, die Vorteile einer raumsparenden Ablage der Dachkonstruktion mit gleicher Krümmungsrichtung beizubehalten, allerdings die bisher beim Stand der Technik vorhandenen Nachteile zu vermeiden, insbesondere die Ablegekinematik zu vereinfachen.

Erfindungsgemäß wird diese Aufgabe durch die im Anspruch 1 genannten Merkmale gelöst.

Vorteilhafte Weiterbildungen des Erfindungsgegenstandes sind den Unteransprüchen zu entnehmen.

Während beim Stand der Technik Frontdachteil und Heckdachteil zusammen mit der daran fest angeordneten Heckscheibe um einen Hauptdrehpunkt bei der Ablage der Dachkonstruktion drehen, ist erfindungsgemäß nunmehr die Heckscheibe von dem Heckdachteil abgekoppelt und mit einem eigenen Rahmen versehen. An den Rahmen sind seitliche Hebel befestigt, die jeweils um einen Drehpunkt an den zum Wechdachteil zugehörigen Fahrzeugsäulen, im allgemeinen die C-Säulen, verschwenkbar sind. Auf diese Weise ist die Heckscheibe separat von dem Heckdachteil drehbar und kann bei der Ablegebewegung der Dachteile separat so verschwenkt werden, daß sie gleichsinnig bzw. in gleicher Krümmungsrichtung zu dem Frontdachteil abgelegt wird. Dies bedeutet, daß im Vergleich zu einer gegensinnigen Ablage deutlich weniger Kofferraumvolumen beansprucht wird. Diese vorteilhafte Ablegeart wird durch eine einfache Kinematik, nämlich die beiden seitlichen Hebel und die gelenkige Verbindung mit der Fahrzeugsäulen erreicht.

In einfacher Weise kann man über mit den seitlichen Hebeln verbundene Zwangsführungshebel, die wiederum an den Hauptlenkern angelenkt sind, eine Zwangsführung bzw. Zwangsbewegung bei der Ablage der Dachkonstruktion erreichen, was bedeutet, daß für die Ablage der Heckscheibe kein eigener Antrieb erforderlich ist.

Selbstverständlich ist es im Rahmen der Erfindung jedoch auch möglich, im Bedarfsfalle einen eigenen Antrieb für die beiden seitlichen Hebel vorzusehen, wenn zusätzliche Hebel z.B. zu Platzproblemen führen würden.

Nachfolgend ist ein Ausführungsbeispiel der Erfindung anhand der Zeichnung prinzipmäßig beschrieben.

Es zeigt:

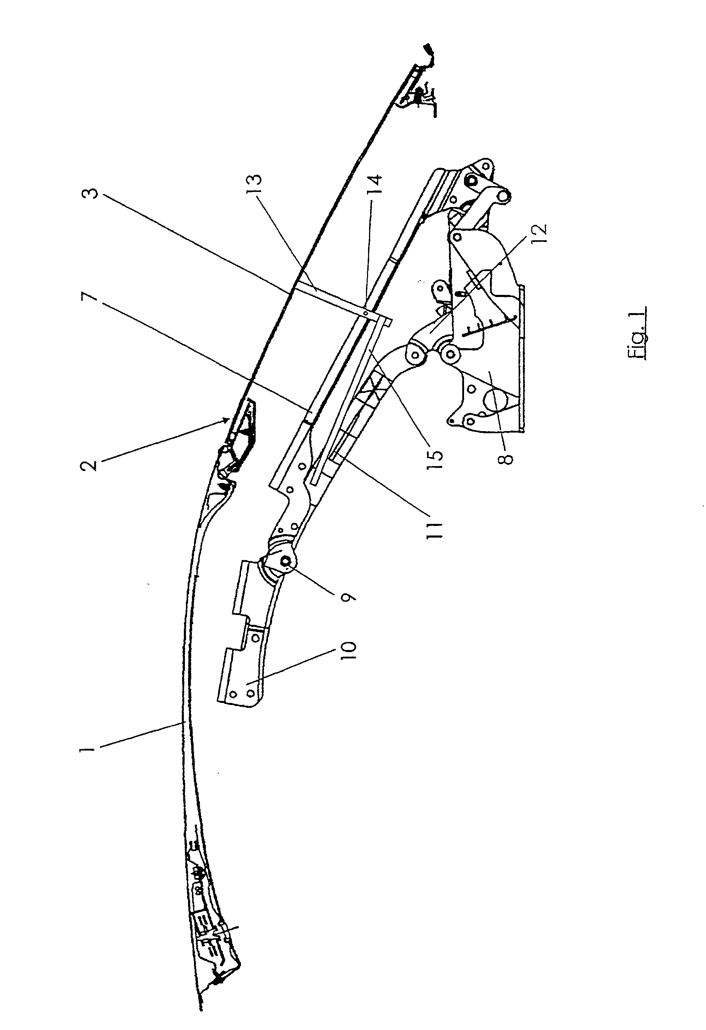

- Fig. 1: eine Seitenansicht der Dachkonstruktion für ein Hardtop-Fahrzeug mit den wesentlichen Betätigungsgliedern im geschlossenen Zustand;
- Fig. 2: eine erste Stufe während des Ablegevorganges der Dachkonstruktion;
- Fig. 3: eine zweite Stufe während des Ablegevorganges der Dachkonstruktion; und
- Fig. 4: die Dachkonstruktion in abgelegtem Zustand.

Grundsätzlich funktioniert die Dachablegevorrichtung für ein Hardtop-Fahrzeug in bekannter Weise, weshalb nachfolgend nur auf die für die Erfindung wesentlichen Teile näher eingegangen wird. Die Dachkonstruktion weist ein Frontdachteil 1 und ein lösbar damit verbundenes Heckdachteil 2 auf, das eine Heckscheibe 3 mit seitlichen Rahmen 4 nebst Dichtteilen 5 und 6 und seitliche C-Säulen 7 als Fahrzeugsäulen aufweist. Am hinteren Ende sind die seitlichen C-Säulen jeweils gelenkig an einem Hauptlager 8 angebunden, während sie an ihren vorderen Enden jeweils einen Hauptdrehpunkt 9 aufweisen, an dem auch ein Scharnier 10 für das Frontdachteil 1 angelenkt ist. An dem von dem Hauptdrehpunkt 9 abgewandten Ende des Scharnieres 10 ist ein Ende eines Hauptlenkers 11 angelenkt, dessen anderes Ende über einen Zwischenhebel 12 mit dem Hauptlager 8 verbunden ist.

Der Rahmen 4 der Heckscheibe 3 ist fest mit einem Hebel 13 verbunden, der im mittleren Bereich der Heckscheibe 3 rechtwinklig vom Rahmen ausgeht und über einen Drehpunkt 14 jeweils gelenkig mit einer C-Säule 7 oder der Säulenbeplankung verbunden ist.

Der Hebel 13 ist an seinem dem Drehpunkt 14 zugewandten Ende fest mit einem Zwangsführungshebel 15 verbunden, der wiederum mit seinem von dem Hebel 13 abgewandten Ende an den dazugehörigen Hauptlenker 11 angelenkt ist.

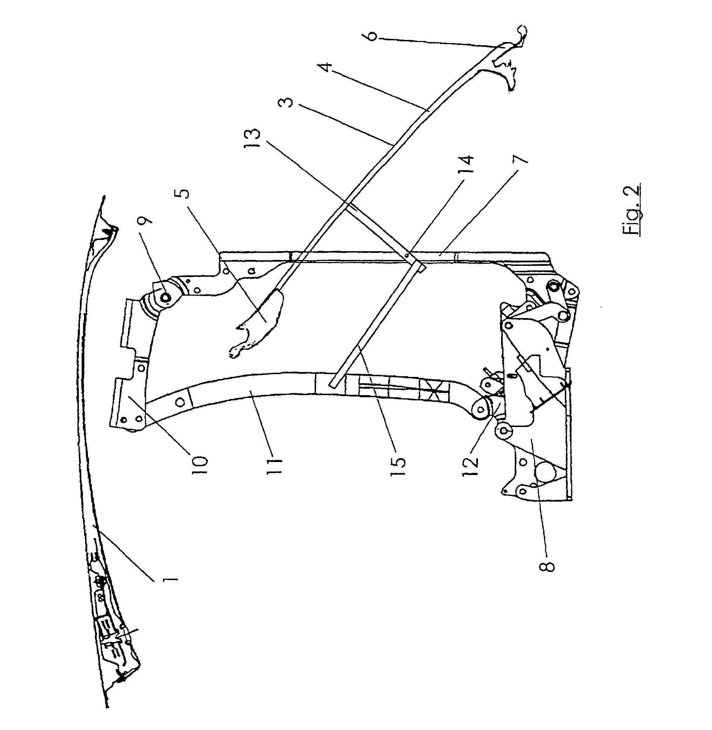

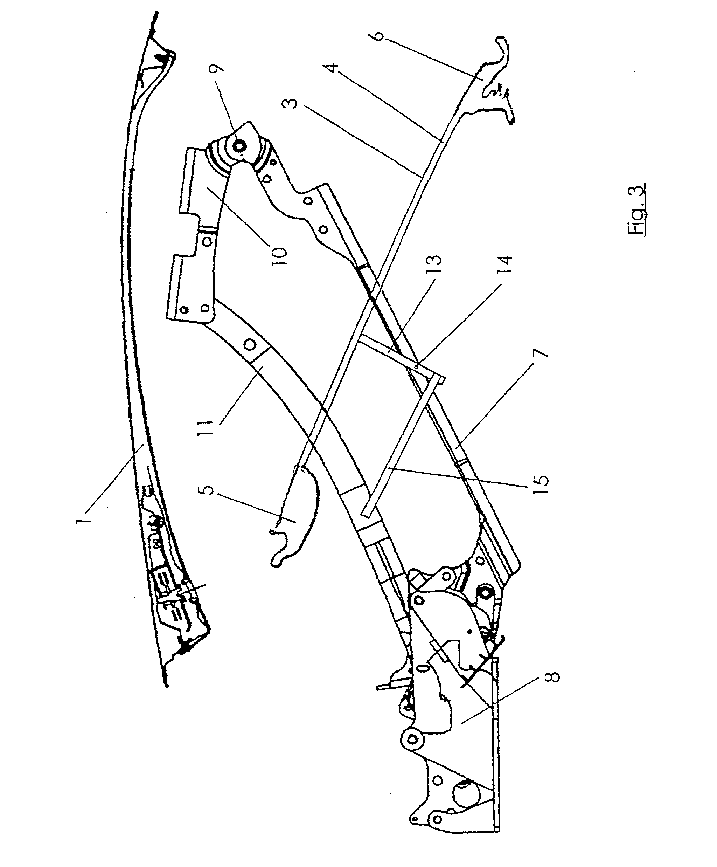

Aus den Fig. 2 bis 4 ist die Ablegebewegung der Dachkonstruktion prinzipmäßig ersichtlich. Mit Antrieb des Hauptlenkers 11 über den Zwischenhebel 12 von einer nicht näher dargestellten Antriebseinrichtung aus wird über die Zwangsführungshebel 15 und die Hebel 13 gleichzeitig auch zwangsgeführt die Heckscheibe 3 bewegt. Aufgrund der vorstehend beschriebenen Anordnung der Hebel und Gelenkpunkte wird die Heckscheibe 3 mit ihrem Rahmen 4 separat von den C-Säulen 7 abgelegt, wobei die Ablegebewegung dabei zwangsgeführt so erfolgt, daß die Heckscheibe 3 mit dem Rahmen 4 keine Drehbewegung nach hinten, sondern lediglich eine leichte Schwenkbewegung nach unten und hinten durchführt, wobei die Heckscheibe 3 grundsätzlich ihre Lagerichtung beibehält. Mit anderen Worten: die vordere bzw. obere Dichtung (Dichtteil 5) verbleibt vorne und die hintere Dichtung 6 verbleibt hinten.

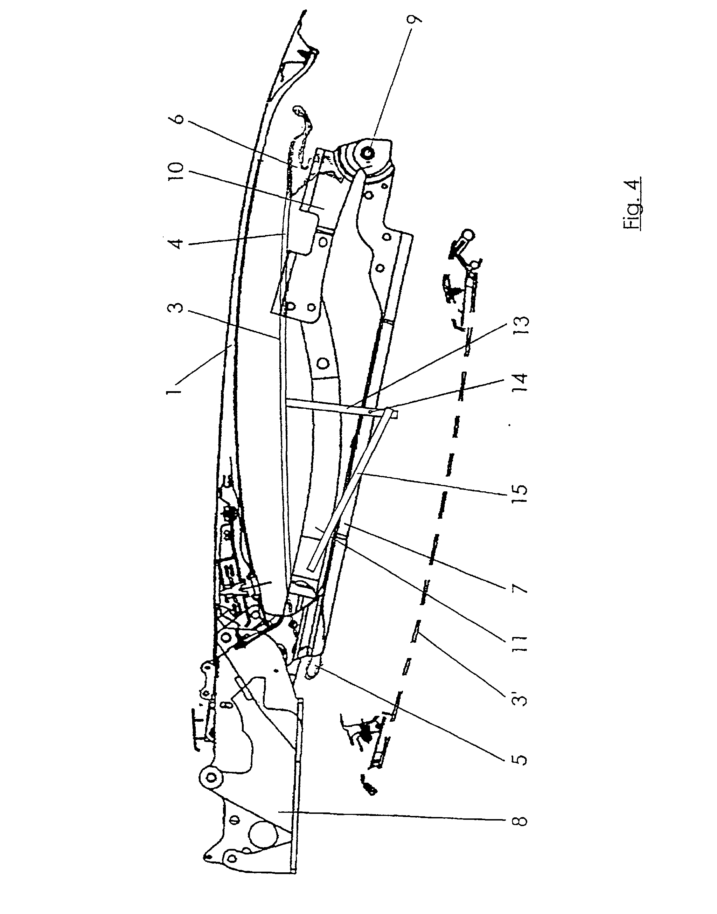

Wie aus der Fig. 4 ersichtlich ist, liegen damit in abgelegtem Zustand das Frontdachteil 1 und die Heckscheibe 3 raumsparend in gleichem Sinne gekrümmt bzw. mit der gleichen Wölbung im Heckbereich des Fahrzeuges. In Fig. 4 ist teilweise gestrichelt zusätzlich eine Heckscheibe 3' in einer Lage eingezeichnet, die sie bei einer Bewegung nach Stand der Technik hätte. Wie ersichtlich, wird durch die erfindungsgemäße Ablage der Heckscheibe 3 ein erheblicher Platzgewinn erreicht.

## Patentansprüche

1. Vorrichtung zur Ablage der Dachkonstruktion eines Hardtop-Fahrzeugs mit einem Frontdachteil (1), mit einem Heckdachteil (2), das mit einer festen Heckscheibe (3) versehen ist, mit seitlichen Hauptlenkern (11) zum Bewegen von Front- und Heckdachteil, und mit seitlichen Fahrzeugsäulen (7), die mit den Hauptlenkern verbunden und Bestandteil des Heckdachteils (2) sind,
**dadurch gekennzeichnet,**
**dass** die Heckscheibe (3) wenigstens mit einem seitlichen Rahmen (4) versehen ist, der durch seitliche, mit dem Rahmen (4) verbundene Hebel (13) und Gelenke (14) an den Fahrzeugsäulen (7) oder der Säulenbeplankung angelenkt ist, wobei bei der Ablegebewegung der Dachteile (1 und 2) die Heckscheibe (3) von dem Heckdachteil (2) abgekoppelt, relativ zu den Fahrzeugsäulen (7) verschwenkt und mit ihrer Wölbung gleichsinnig zum Frontdachteil (1) im hinteren Fahrzeugbereich abgelegt wird.

2. Vorrichtung nach Anspruch 1,
**dadurch gekennzeichnet,**
**dass** die seitlichen Hebel (13) jeweils mit einem Ende wenigstens annähernd senkrecht und starr mit dem Rahmen (4) der Heckscheibe (3) verbunden sind, und dass sie mit ihren anderen Enden wenigstens annähernd im mittleren Bereich der Fahrzeugsäulen (7) mit ihren Gelenken (14) angelenkt sind.

3. Vorrichtung nach Anspruch 1 oder 2,
**dadurch gekennzeichnet, dass** die Hebel (13) jeweils mit einem Zwangsführungshebel (15) verbunden sind, deren freie Enden an den Hauptlenkern (11) angelenkt sind.

4. Vorrichtung nach Anspruch 1 oder 2,
**dadurch gekennzeichnet,**
**dass** die Hebel (13) mit einer eigenen Antriebseinrichtung versehen sind.

## Claims

1. Device for stowing the roof structure of a hard top vehicle with a front roof part (1), comprising a rear roof part (2) provided with a rigid rear window (3), comprising lateral main links (11) for moving the front and rear roof part, and comprising lateral vehicle pillars (7) which are connected to the main links and are a component of the rear roof part (2), **characterised in that** the rear window (3) is provided at least with one lateral frame (4) which is articulated to the vehicle pillars (7) or the pillar panelling by lateral levers (13) and joints (14) connected to the frame (4), wherein the rear window (3) is decoupled from the rear roof part (2) during the stowing movement of the roof parts (1 and 2), is pivoted relative to the vehicle pillars (7) and, with its curvature in the same direction as the front roof part (1), is stowed in the rear vehicle region.

2. Device according to claim 1, **characterised in that** the lateral levers (13) are each connected at one respective end at least approximately perpendicularly and rigidly to the frame (4) of the rear window (3) and **in that** they are articulated at their other ends, at least approximately in the central region of the vehicle pillars (7), at their joints (14).

3. Device according to claim 1 or 2, **characterised in that** the levers (13) are each connected to a forced guide lever (15) of which the free ends are articulated to the main links (11).

4. Device according to claim 1 or 2, **characterised in that** the levers are provided with an independent drive device.

## Revendications

1. Dispositif pour le rangement d'un mécanisme de toit pour véhicule avec toit rigide, muni d'une partie avant de toit (1), avec une partie arrière de toit (2), munie d'une vitre arrière (3) rigide, avec des bras articulés principaux latéraux (11), pour déplacer la partie avant de toit et la partie arrière de toit, et avec des colonnes de toit latérales (7), reliées aux bras articulés principaux et faisant partie de la partie arrière de toit (2), **caractérisé en ce que** la vitre arrière (3) est munie d'au moins un cadre latéral (4), articulé aux colonnes de véhicule (7) ou au panneau de colonne, à l'aide de leviers latéraux (13), reliés au cadre (4), et d'articulations (14), où, lors du mouvement de rangement des parties de toit (1 et 2), la vitre arrière (3) est désaccouplée de la partie arrière de toit (2), est pivotée par rapport aux colonnes de véhicule (7) et rangée dans la zone arrière du véhicule, sa courbure étant orientée dans le même sens que la partie avant de toit (1).

2. Dispositif selon la revendication 1, **caractérisé en ce que** les leviers latéraux (13) sont reliés chacun, par une première extrémité, au moins perpendiculairement et rigidement, au cadre (4) de la vitre arrière (3), et **en ce qu'**ils sont articulés, par leurs autres extrémités, au moins à peu près dans la zone médiane des colonnes de véhicule (7), par leurs articulations (14).

3. Dispositif selon la revendication 1 ou 2, **caractérisé en ce que** les leviers (13) sont chacun reliés à un levier de guidage forcé (15) dont les extrémités libres sont articulées sur les bras articulés principaux (11).

4. Dispositif selon la revendication 1 ou 2, **caractérisé en ce que** les leviers (13) sont munis d'un dispositif d'entraînement propre.
